Europäisches Patentamt

European Patent Office

Office européen des brevets

(19)

(11) **EP 0 631 118 B1**

(12) **EUROPÄISCHE PATENTSCHRIFT**

(45) Veröffentlichungstag und Bekanntmachung des Hinweises auf die Patenterteilung:
22.04.1998 Patentblatt 1998/17

(51) Int Cl.⁶: **G01G 23/01**

(21) Anmeldenummer: 94109739.6

(22) Anmeldetag: 23.06.1994

(54) **Waage**

A weighing scale

Balance

(84) Benannte Vertragsstaaten:
**AT BE CH DE DK ES FR GB IT LI NL SE**

(30) Priorität: **23.06.1993 DE 4320892**

(43) Veröffentlichungstag der Anmeldung:
**28.12.1994 Patentblatt 1994/52**

(73) Patentinhaber: **Mettler-Toledo (Albstadt) GmbH
72458 Albstadt (DE)**

(72) Erfinder:
• **Mürdter, Herbert, Dipl.-Ing. (FH)
D-72461 Albstadt-Tailfingen (DE)**
• **Pfister, Johann, Dipl.-Ing. (FH)
D-72336 Balingen-Weilstetten (DE)**

(74) Vertreter: **Patentanwälte
Leinweber & Zimmermann
Rosental 7
80331 München (DE)**

(56) Entgegenhaltungen:
**FR-A- 2 580 804           LU-A- 84 735
US-A- 4 512 429**

• **PATENT ABSTRACTS OF JAPAN vol. 6, no. 217
(P-152) (1095) 30. Oktober 1982 & JP-A-57 120
820 (TOKYO DENKI K.K.) 28. Juli 1982**
• **PATENT ABSTRACTS OF JAPAN vol. 6, no. 233
(P-156) (1111) 19. November 1982 & JP-A-57 135
323 (SHIMADZU SEISAKUSHO K.K.) 20. August
1982**

## Beschreibung

Die Erfindung bezieht sich auf eine Waage mit einer die von der Erdbeschleunigung hervorgerufene Gewichtskraft einer zu wiegenden Masse messenden Einrichtung, einer Einrichtung zur Bildung eines der gemessenen Gewichtskraft entsprechenden Massewertes in Abhängigkeit von einem einem Eichort der Waage entsprechenden Wert der Erdbeschleunigung und einer zur Anpassung des der gemessenen Gewichtskraft entsprechenden Massewertes an den Wert der Erdbeschleunigung am Aufstellungsort der Waage dienenden Einrichtung, die eine Eingabeeinrichtung, in die geographischen Lagewerten entsprechende Eingabewerte eingebbar sind, aufweist sowie eine daran angeschlossene Verarbeitungseinrichtung, die ansprechend auf jeden derartigen Eingabewert den der Bildung des Massewertes zugrundeliegenden Wert der Erdbeschleunigung an die diesem Eingabewert entsprechende geographische Lage anpaßt.

Eine derartige bekannte Waage (FR-A-2 580 804) beruht auf einer Einteilung des für die Waage vorgesehenen Benutzungsgebietes in eine Anzahl von Zonen geographischer Breite und eine Anzahl von Höhenzonen. Für jede dieser Zonen ist in der Waage ein Korrekturfaktor abgespeichert. Die Waage wird dadurch ortskompensiert, daß mittels eines an der Waage vorgesehenen Binärschalters die für den jeweiligen Aufstellungsort zutreffenden Zonen der geographischen Breite und Höhe eingestellt werden.

Eine bekannte Alternative dazu (US-A-4 512 429) beruht auf einer Einteilung der Erdoberfläche in Zonen oder in Großstädte, wobei durch einen an der Waage vorgesehenen Binärschalter oder eine Eingabetastatur die betreffende Zone bzw. Großstadt des Aufstellungsortes der Waage durch eine Kodezahl oder auch durch Klartext identifiziert werden kann. Die betreffende Korrektur des Wertes der Erdbeschleunigung erfolgt sodann in Form eines geeigneten Vielfachen eines in der Waage gespeicherten Inkrements.

In einer anderen bekannten Waage (EP 0 093 183 B1) ist eine bekannte Referenzmasse vorgesehen, die mittels einer Auflegeeinrichtung auf die die Gewichtskraft messende Einrichtung der Waage aufgelegt werden kann. Das der Gewichtskraft der Referenzmasse an einem Eichort entsprechende Signal der Meßeinrichtung wird in einem Referenzspeicher gespeichert. Ferner ist ein weiterer Speicher vorgesehen, in den in einem Kalibriervorgang das der Gewichtskraft der Referenzmasse entsprechende Signal am Aufstellungsort der Waage abgelegt wird. Die Anpassung des der am Aufstellungsort gemessenen Gewichtskraft entsprechenden Massewertes erfolgt durch Multiplikation mit einem dem Quotienten aus den in dem Referenzspeicher und dem weiteren Speicher abgespeicherten Werten der Gewichtskraft der Referenzmasse entsprechenden Korrekturfaktor. Hierbei ist es also zur Erfassung der Ortsabhängigkeit der Erdbeschleunigung erforderlich, die Waage mit der bekannten Referenzmasse und der Auflegeeinrichtung auszustatten und den Kalibriervorgang auszuführen, was einen verhältnismäßig hohen baulichen Aufwand bedingt sowie eine besondere Handhabung der Waage für deren ortsabhängige Kalibrierung erfordert.

Der Erfindung liegt die Aufgabe zugrunde, eine Waage der eingangs genannten Art zu schaffen, deren Anpassungseinrichtung einfach aufgebaut ist, insbesondere keinen die Ortsabhängigkeit der Erdbeschleunigung erfassenden Fühler erfordert, und bei hoher Genauigkeit einfach zu handhaben ist.

Erfindungsgemäß wird diese Aufgabe dadurch gelöst, daß die Verarbeitungseinrichtung eine den Wert der Erdbeschleunigung aus einer deren Ortsabhängigkeit in geschlossener Form als Funktion von die geographische Breite und die Höhe des Aufstellungsortes unmittelbar darstellenden Eingabewerten der Eingabeeinrichtung bestimmenden Formel berechnende Einrichtung aufweist.

Bekanntlich besteht zwischen der Gewichtskraft G einer Masse, ihrem Massewert m und der Erdbeschleunigung g der Zusammenhang

$$G = m \cdot g.$$

Also kann der Wert der Erdbeschleunigung g in einem Eichvorgang ermittelt werden, in dem ein bekanntes Eichgewicht auf die Waage aufgelegt und ihre mit der Waage gemessene Gewichtskraft bestimmt wird. Dieser Wert der Erdbeschleunigung gilt jedoch nur für den Eichort und nicht für einen davon verschiedenen Aufstellungsort der Waage. Die Erfindung macht sich die Tatsache zunutze, daß die Änderung des Wertes der Erdbeschleunigung in Abhängigkeit von der geographischen Lage des Aufstellungsortes, d.h. die Ortsabhängigkeit des Wertes der Erdbeschleunigung als Funktion der geographischen Breite des Aufstellungsortes und seiner Höhe über Normalnull durch eine Formel in geschlossener Form darstellbar ist. Hiervon ausgehend bedient sich die Erfindung lediglich einer Eingabeeinrichtung für die die geographische Lage des Aufstellungsortes darstellenden Daten, die für jeden Aufstellungsort beispielsweise durch handelsübliches geographisches Kartenmaterial ohne weiteres erhoben werden können. Durch die auf diese Daten ansprechende Verarbeitungseinrichtung wird aufgrund des bekannten Zusammenhangs der an den Aufstellungsort angepaßte Wert der Erdbeschleunigung anstelle des am Eichort ermittelten Wertes bei der Bildung des der gemessenen Gewichtskraft entsprechenden Massewertes zugrunde gelegt. Die Erfindung ermöglicht also eine besonders einfache Korrektur der Abhängigkeit der Waage von ihrem Aufstellungsort. Dabei kann jeder beliebige geographische Lagewert eingegeben und verarbeitet werden, so daß für jeden Aufstellungsort der Lagewert individuell und mit beliebiger Genauigkeit angewendet werden kann.

Die Verarbeitungseinrichtung mit ihrer den Wert der Erdbeschleunigung in Abhängigkeit von die geographische Breite und die Höhe des Aufstellungsortes darstellenden Eingabewerten berechnenden Einrichtung, bei der es sich beispielsweise um eine festverdrahtete Rechenlogik oder um einen entsprechenden Programmteil eines für die Steuerung der Waage vorgesehenen Mikroprozessors handeln kann, braucht dabei nur den zur Auswertung einer die Abhängigkeit von der Erdbeschleunigung von der geographischen Breite und der Höhe des Aufstellungsortes darstellenden Formel ausreichenden Umfang aufzuweisen. Ein Beispiel ist die Formel nach Cassinis, derzufolge für die Ortsabhängigkeit der Erdbeschleunigung gilt

$$g = g_0 \, (1 + 0{,}005\,2884 \sin^2 \beta -$$

$$5{,}9 \cdot 10^{-6} \sin^2 (2\beta) - h/h_0),$$

wobei
$g_0 = 9{,}78035 \ \mathrm{m \ s^{-2}}$
$h_0 = 3{,}3 \cdot 10^6 \ \mathrm{m}$
$\beta$ geographische Breite
$h$ Höhe über NN in m.

Eine im Rahmen der Erfindung liegende Ausführungsform besteht darin, daß die Eingabeeinrichtung eine Eingabetastatur aufweist. Die Korrektur des Massewertes erfolgt dabei dadurch, daß am Aufstellungsort der Waage in einem Kalibriermodus von einer hierzu berechtigten Bedienungsperson die die geographische Lage des Aufstellungsortes darstellenden Daten, beispielsweise die aus Landkarten entnommene geographische Breite und die Höhe über Normalnull, manuell eingetastet werden.

Alternativ kann die Erfindung auch derart verwirklicht werden, daß die Eingabeeinrichtung eine Schnittstelle zum Anschluß eines die geographischen Lagewerte liefernden Satelliten-Navigationsempfängers aufweist. Hierbei werden also die die geographische Lage des Aufstellungsortes darstellenden Daten beim Kalibriervorgang über die Schnittstelle automatisch in die Waage übertragen.

Schließlich erscheint wegen der künftig zu erwartenden Verbilligung von Satelliten-Navigationsempfängern auch eine Ausführungsform wirtschaftlich interessant, bei der der Satelliten-Navigationsempfänger in die Waage integriert ist. Bei dieser Ausgestaltung erfolgt dann völlig automatisch eine kontinuierliche Korrektur auch bei wechselnden Aufstellungsorten, ohne daß es der Zwischenschaltung einer die Kalibrierung veranlassenden Bedienungsperson bedürfte.

Weitere Merkmale, Einzelheiten und Vorteile der Erfindung ergeben sich aus der folgenden Beschreibung und der Zeichnung, auf die bezüglich einer erfindungswesentlichen Offenbarung aller im Text nicht erwähnten Merkmale ausdrücklich hingewiesen wird.

Hierin zeigen:

Fig. 1    ein Blockdiagramm einer Waage mit einer Anpassungseinrichtung für die Abhängigkeit des ermittelten Massewertes vom Wert der Erdbeschleunigung am Aufstellungsort der Waage, und

Fig. 2    ein Diagramm zur Darstellung der Ortsabhängigkeit der Erdbeschleunigung.

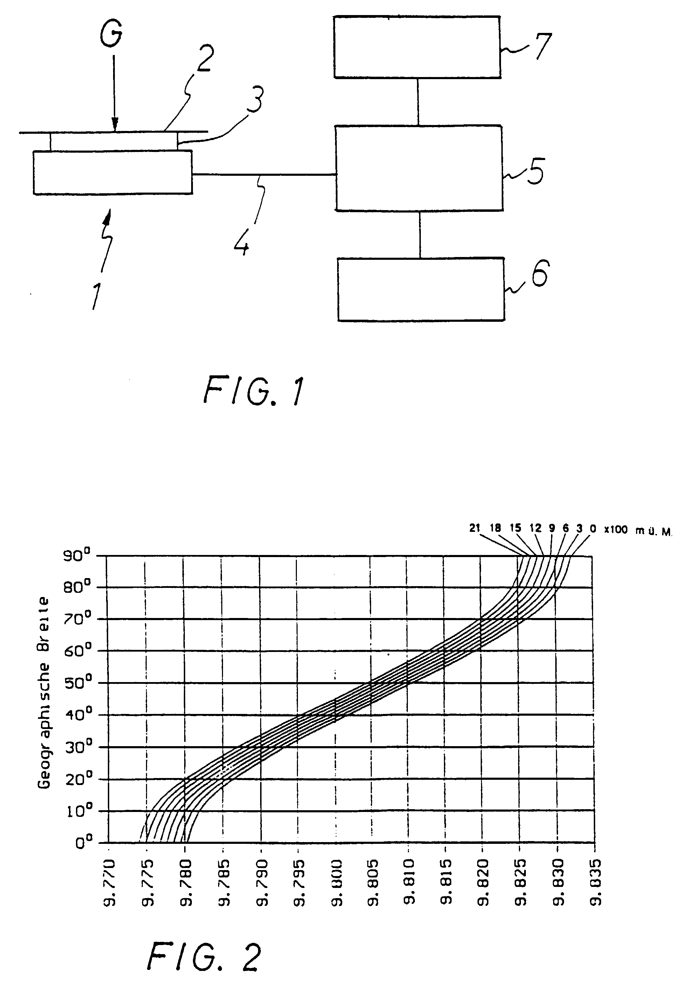

In Fig. 1 weist eine schematisch dargestellte Ausführungsform einer Waage eine Wägebrücke 1 mit einer zur Aufnahme einer zu wiegenden Masse dienenden Wägeplattform 2 auf. Die zu wiegende Masse übt unter dem Einfluß der Erdbeschleunigung eine durch einen Pfeil symbolisierte Gewichtskraft G auf die Wägeplattform 2 aus, wobei diese Gewichtskraft G durch Kraftübertragungsglieder 3 auf eine in der Wägebrücke 1 angeordnete, nicht dargestellte Meßzelle übertragen wird. Die Meßzelle bildet darauf ansprechend ein der Gewichtskraft G entsprechendes elektrisches Signal, das bei der dargestellten Ausführungsform über eine Verbindungsleitung 4 einem Auswertegerät 5 zugeleitet wird. Insbesondere kann es sich bei der Wägebrücke 1 um eine nach dem Prinzip der elektromagnetischen Kraftkompensation arbeitende Wägebrücke handeln, bei der das die Gewichtskraft darstellende elektrische Signal aus dem Kompensationsstrom durch einen Magneten abgeleitet wird, welcher der Gewichtskraft G die Waage hält. Andere Beispiele für mögliche Meßzellen sind Meßzellen mit schwingenden Saiten oder Meßzellen mit Dehnungsmeßstreifen. Doch ist auch jede andere Meßzelle geeignet, durch die die Gewichtskraft erfaßt und darauf ansprechend ein der Gewichtskraft entsprechendes Signal gebildet wird.

In dem Auswertegerät, dessen Funktionen in der Regel durch einen entsprechend programmierten Mikroprozessor gesteuert sind und an das eine Eingabetastatur 6 und eine alphanumerische Sichtanzeige 7 angeschlossen sind, wird ansprechend auf das der Gewichtskraft entsprechende Signal der der zu wiegenden Masse entsprechende Massewert gebildet und auf der Sichtanzeige 7 angezeigt.

Die Umsetzung der mit der Wägebrücke 1 gemessenen Gewichtskraft G in den zugehörigen Massewert $m$ der zu wiegenden Masse beruht auf dem Zusammenhang $G = m \cdot g$, was eine Ermittlung des Wertes der Erdbeschleunigung g erfordert. Dies kann beispielsweise durch einen einmaligen Eichvorgang erfolgen, bei dem eine Eichmasse, deren Massewert genau bekannt ist, auf die Wägebrücke 1 aufgelegt und dadurch ein der Erdbeschleunigung g entsprechender Wert am Eichort ermittelt wird. Mit dem solchermaßen ermittelten Wert der Erdbeschleunigung kann dann die Waage am Eichort betrieben werden.

Wie in Fig. 2 veranschaulicht ist, hängt der Wert der Erdbeschleunigung von der geographischen Lage des Aufstellungsortes der Waage ab. Im einzelnen gibt jede der in Fig. 2 dargestellten Kurven den Zusammenhang zwischen dem Wert der Erdbeschleunigung (Abszisse) und der geographischen Breite (Ordinate) für eine bestimmte Höhe über Normalnull an, wie den den einzelnen Kurven zugeordneten Höhenangaben am oberen Rand des Diagramms zu entnehmen ist. Die in Fig. 2 graphisch dargestellte funktionale Abhängigkeit des Wertes der Erdbeschleunigung von der geographischen Breite und der Höhe über Normalnull läßt sich, jedenfalls angenähert, formelmäßig darstellen, wofür beispielhaft auf die Formel nach Cassinis hingewiesen sei.

Wegen dieser Lageabhängigkeit der Erdbeschleunigung ist die Eichung also nur am Eichort gültig. Wenn die Waage an einen davon verschiedenen Aufstellungsort gebracht wird, ist wegen des dort herrschenden geänderten Wertes der Erdbeschleunigung die beispielsweise am Herstellungsort vorgenommene Eichung nicht mehr gültig.

Zur Behebung dieser Schwierigkeit ist bei dem in Fig. 1 dargestellten Ausführungsbeispiel der Waage in dem Auswertegerät 5 eine Anpassungseinrichtung vorgesehen, in der die gegenüber dem Eichort aufgetretene Änderung des Wertes der Erdbeschleunigung am Aufstellungsort der Waage berücksichtigt wird. Zu diesem Zweck ist das Auswertegerät 5 mit einer Eingabeeinrichtung ausgestattet, deren Funktion im dargestellten Ausführungsbeispiel von der Eingabetastatur 6 wahrgenommen wird. Mittels dieser Eingabeeinrichtung werden in einem Kalibriermodus die geographische Breite des Aufstellungsortes und seine Höhe über Normalnull als die geographische Lage des Aufstellungsortes der Waage darstellende Daten eingegeben. Die Anpassungseinrichtung weist ferner eine Verarbeitungseinrichtung auf, die in dem dargestellten Ausführungsbeispiel ebenfalls in dem Auswertegerät 5 verwirklicht und derart ausgebildet ist, daß sie ansprechend auf die Eingabedaten der Eingabetastatur 6 den zur Bildung des Massewertes m herangezogenen Wert der Erdbeschleunigung entsprechend korrigiert.

Diese Anpassung des Wertes der Erdbeschleunigung entsprechend den die geographische Lage des Aufstellungsortes darstellenden Daten erfolgt nach der vorstehend erwähnten formelmäßigen Berechnung. Dabei weist die Verarbeitungseinrichtung eine entsprechende Rechenfunktion auf, die beispielsweise durch eine entsprechende Programmierung des zur Steuerung der Waage ohnehin vorgesehenen Mikroprozessors implementiert sein kann.

Ersichtlich können statt der in dem darstellten Ausführungsbeispiel vorgesehenen Eingabetastatur 6 auch andere Eingabeeinrichtungen Verwendung finden, sofern sie nur geeignet sind, die erforderlichen geographischen Daten an die Verarbeitungseinrichtung zu übermitteln. Insbesondere kann das Auswertegerät 5 mit einer Schnittstelle zum Anschluß eines Satelliten-Navigationsempfängers versehen sein, der die geographischen Daten liefert. Ein solcher Satelliten-Navigationsempfänger könnte auch unmittelbar in das Auswertegerät 5 eingebaut sein. Im letztgenannten Fall bedarf es dann keiner besonderen Maßnahmen, die Autorisierung für den Kalibriervorgang zu sperren, was bei der dargestellten Ausführungsform mit der Eingabetastatur 6 erforderlich ist, um unautorisierte Umeichungen zu verhindern. Derartige Maßnahmen zum Schutz vor unautorisierten Umkalibrierungen sind jedoch bekannt.

**Patentansprüche**

1.  Waage mit einer die von der Erdbeschleunigung hervorgerufene Gewichtskraft einer zu wiegenden Masse messenden Einrichtung (1), einer Einrichtung (5) zur Bildung eines der gemessenen Gewichtskraft entsprechenden Massewertes in Abhängigkeit von einem einem Eichort der Waage entsprechenden Wert der Erdbeschleunigung und einer zur Anpassung des der gemessenen Gewichtskraft entsprechenden Massewertes an den Wert der Erdbeschleunigung am Aufstellungsort der Waage dienenden Einrichtung, die eine Eingabeeinrichtung (6), in die geographischen Lagewerten entsprechende Eingabewerte eingebbar sind, aufweist sowie eine daran angeschlossene Verarbeitungseinrichtung (5), die ansprechend auf jeden derartigen Eingabewert den der Bildung des Massewertes zugrundeliegenden Wert der Erdbeschleunigung an die diesem Eingabewert entsprechende geographische Lage anpaßt, **dadurch gekennzeichnet,** daß die Eingabe einrichtung zur Eingabe von beliebigen geographischen Lage- und Höhenwerten vorgesehen ist, und, daß die Verarbeitungseinrichtung (5) eine den Wert der Erdbeschleunigung aus einer deren Ortsabhängigkeit in geschlossener Form als Funktion von die geographische Breite und die Höhe des Aufstellungsortes unmittelbar darstellenden Eingabewerten der Eingabeeinrichtung bestimmenden Formel berechnende Einrichtung aufweist.

2.  Waage nach Anspruch 1, **dadurch gekennzeichnet**, daß die Eingabeeinrichtung eine Eingabetastatur aufweist.

3.  Waage nach Anspruch 1 oder 2, **dadurch gekennzeichnet**, daß die Eingabeeinrichtung eine Schnittstelle zum Anschluß eines die geographischen Lagewerte liefernden Satelliten-Navigationsempfängers aufweist.

4.  Waage nach Anspruch 3, **dadurch gekennzeichnet**, daß der Satelliten-Navigationsempfänger in die Waage integriert ist.

## Claims

1. Balance with a device (1) measuring the weight of a mass to be weighed that is caused by the acceleration due to gravity, a device (5) for deriving a value of the mass corresponding to the measured weight as a function of a value of the acceleration due to gravity corresponding to a calibration site of the balance, and a device serving to adapt the value of the mass corresponding to the measured weight to the value of the acceleration due to gravity at the site of deployment of the balance, said device comprising an input device (6) into which input values corresponding to geographical location values are capable of being input and also a processing device (5) connected to said input device which in response to each such input value adapts the value of the acceleration due to gravity serving as the basis for the derivation of the value of the mass to the geographical location corresponding to said input value, **characterised in that** the input device is provided for the input of any geographical location and altitude values and in that the processing device (5) comprises a device calculating the value of the acceleration due to gravity from a formula determining the local dependence thereof in closed form as a function of input values from the input device directly representing the geographical latitude and the altitude of the site of deployment.

2. Balance according to Claim 1, **characterised in that** the input device comprises an input keyboard.

3. Balance according to Claim 1 or 2, **characterised in that** the input device comprises an interface for the connection of a satellite navigation receiver supplying the geographical location values.

4. Balance according to Claim 3, **characterised in that** the satellite navigation receiver is integrated within the balance.

## Revendications

1. Balance comportant un dispositif (1) mesurant la force de pesanteur, provoquée par l'accélération terrestre, d'une masse qui doit être pesée, un dispositif (5) destiné au calcul d'une valeur de masse, correspondant à la force de pesanteur mesurée, en fonction d'une valeur d'accélération terrestre correspondant à un lieu d'étalonnage de la balance, ainsi qu'un dispositif, servant à l'adaptation de la valeur de masse, correspondant à la force de pesanteur mesurée, à la valeur de l'accélération terrestre au lieu d'implantation de la balance, lequel dispositif présente un dispositif d'acquisition de données (6), dans lequel peuvent être saisies des valeurs de données d'entrée correspondant à des valeurs de situation géographique, ainsi qu'un dispositif de traitement (5) raccordé à celui-ci et qui, en réponse à chaque valeur de donnée d'entrée de ce genre, adapte la valeur de l'accélération terrestre, servant de base au calcul de la valeur de masse, à la situation géographique correspondant à cette valeur de donnée d'entrée, **caractérisée en ce que** le dispositif d'acquisition de données est prévu pour l'acquisition de valeurs de situation géographique et d'altitude choisies à volonté, et le dispositif de traitement (5) présente un dispositif qui calcule la valeur de l'accélération terrestre, à partir d'une formule déterminant sa dépendance par rapport au lieu sous une forme fermée, en tant que fonction de valeurs de données d'entrée du dispositif d'acquisition de données, représentant directement la latitude géographique et l'altitude du lieu d'implantation.

2. Balance selon la revendication 1, **caractérisée en ce que** le dispositif d'acquisition de données présente un clavier de saisie de données.

3. Balance selon la revendication 1 ou 2, **caractérisée en ce que** le dispositif d'acquisition de données présente une interface pour le raccordement d'un récepteur de navigation par satellites fournissant les valeurs de situation géographique.

4. Balance selon la revendication 3, **caractérisée en ce que** le récepteur de navigation par satellites est intégré dans la balance.

FIG. 1

FIG. 2